(19) Europäisches Patentamt / European Patent Office / Office européen des brevets

(11) **EP 4 418 343 A1**

(12) **EUROPEAN PATENT APPLICATION**

(43) Date of publication:
**21.08.2024 Bulletin 2024/34**

(21) Application number: **24153967.5**

(22) Date of filing: **25.01.2024**

(51) International Patent Classification (IPC):
*H01M 4/131* (2010.01)   *H01M 4/134* (2010.01)
*H01M 4/136* (2010.01)   *H01M 4/1391* (2010.01)
*H01M 4/36* (2006.01)   *H01M 4/40* (2006.01)
*H01M 4/58* (2010.01)   *H01M 4/02* (2006.01)

(52) Cooperative Patent Classification (CPC):
**H01M 4/131; H01M 4/134; H01M 4/136;**
**H01M 4/1391; H01M 4/364; H01M 4/366;**
**H01M 4/405; H01M 4/5825; H01M 2004/027**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.02.2023 JP 2023021505**

(71) Applicant: **TOYOTA JIDOSHA KABUSHIKI KAISHA**
**Toyota-shi, Aichi-ken, 471-8571 (JP)**

(72) Inventor: **HORIKAWA, Daisuke**
**Toyota-shi, 471-8571 (JP)**

(74) Representative: **D Young & Co LLP**
**3 Noble Street**
**London EC2V 7BQ (GB)**

(54) **LITHIUM METAL NEGATIVE ELECTRODE SECONDARY BATTERY**

(57)     A lithium metal negative electrode secondary battery (100) comprises a positive electrode (10), a separator (30), a negative electrode (20), and an electrolyte solution. The electrolyte solution includes Li ions. The separator (30) is interposed between the positive electrode (10) and the negative electrode (20). The negative electrode (20) includes a negative electrode base material (21) and a covering layer (22). The covering layer (22) covers at least part of a surface of the negative electrode base material (21). The covering layer (22) includes a Li-ion conductor. The Li-ion conductor has a Li-ion conductivity from $1.0\times10^{-13}$ to $2.0\times10^{-9}$ S/cm.

FIG.13

EP 4 418 343 A1

**Description**

CROSS REFERENCE TO RELATED APPLICATIONS

This nonprovisional application is based on Japanese Patent Application No. 2023-021505 filed on February 15, 2023, with the Japan Patent Office, the entire contents of which are hereby incorporated by reference.

BACKGROUND OF THE DISCLOSURE

Field

The present disclosure relates to a lithium metal negative electrode secondary battery.

Description of the Background Art

Japanese Patent Laying-Open No. 2021-166195 discloses forming a layer that includes lithium phosphate, on the surface of a negative electrode current collector.

SUMMARY OF THE DISCLOSURE

Generally, at a negative electrode of a lithium (Li) ion secondary battery, an insertion reaction takes place. The insertion reaction refers to a reaction of Li ions moving in and out of crystals of a host material (such as graphite, for example).

At a negative electrode of a Li metal negative electrode secondary battery, a dissolution/deposition reaction takes place. More specifically, during charging, Li metal becomes deposited from the electrolyte solution. During discharging, Li metal dissolves into the electrolyte solution. Due to the dissolution/deposition reaction, energy density is expected to be increased. However, there is still some room for improvement in cycle endurance of Li metal negative electrode secondary batteries.

An object of the present disclosure is to improve cycle endurance of Li metal negative electrode secondary batteries.

Hereinafter, the technical configuration and effects of the present disclosure will be described. It should be noted that the action mechanism according to the present specification includes presumption. The action mechanism does not limit the technical scope of the present disclosure.

1. A lithium metal negative electrode secondary battery comprises a positive electrode, a separator, a negative electrode, and an electrolyte solution. The electrolyte solution includes lithium ions. The separator is interposed between the positive electrode and the negative electrode. The negative electrode includes a negative electrode base material and a covering layer. The covering layer covers at least part of a surface of the negative electrode base material. The covering layer includes a lithium-ion conductor. The lithium-ion conductor has a lithium-ion conductivity from $10 \times 10^{-13}$ to $2.0 \times 10^{-9}$ S/cm.

Conventionally, in a Li metal negative electrode secondary battery, during charging, Li metal may become deposited non-uniformly. As a result of repeated charge and discharge (repeated dissolution and deposition), non-uniformity of Li metal may be increased. For example, Japanese Patent Laying-Open No. 2021-166195 suggests forming a protective layer on the surface of a negative electrode base material. The protective layer includes lithium phosphate ($Li_3PO_4$). Japanese Patent Laying-Open No. 2021-166195 states that due to the presence of the protective layer, the deposition of Li metal becomes uniform.

However, the presence of the protective layer can also facilitate capacity degradation. Due to the high Li-ion conductivity of $Li_3PO_4$, Li ions move through the protective layer to reach the surface of the negative electrode base material. At the surface of the negative electrode base material, Li ions receive electrons and thereby Li metal becomes deposited. The Li metal may form a Li metal layer. As the Li metal becomes deposited (as charging proceeds), the Li metal layer may become thicker. The Li metal layer thus grows and pushes up the protective layer, and thereby a three-layer structure is formed. The resulting three-layer structure includes the negative electrode base material, the Li metal layer, and the protective layer in this order. In the three-layer structure ((negative electrode base material)/(Li metal layer)/(protective layer)), the protective layer may inhibit contact between the Li metal layer and the electrolyte solution. As a result, the Li metal layer may not be sufficiently impregnated with the electrolyte solution. With the insufficient impregnation with the electrolyte solution, electric charge carriers (Li ions) are not easily transported to the interface between the negative electrode base material and the Li metal layer. Due to the insufficient supply of Li ions, the size of Li metal deposition becomes small. Due to the small size of Li metal deposition, at the interface between the Li metal layer and the negative electrode base material, a side reaction between Li metal and the electrolyte solution may be facilitated. As a result, peel strength between the Li metal layer and the negative electrode base material may be impaired. When peeling occurs at the interface between the Li metal layer and the negative electrode base material, Li metal comes off at some parts. The Li metal that has come off may cause irreversible capacity loss. As a result of Li metal coming off, capacity degradation may proceed rapidly.

Usually, $Li_3PO_4$ in the protective layer according to Japanese Patent Laying-Open No. 2021-166195 has a Li-ion conductivity of about $1.0 \times 10^{-7}$ S/cm. As compared to this, the Li-ion conductor included in the covering layer according to the present disclosure has a markedly low Li-ion conductivity. More specifically, the Li-ion conductivity of the Li-ion conductor is $2.0 \times 10^{-9}$ S/cm or less.

In the present disclosure, due to the low Li-ion conductivity of the Li-ion conductor, it is conceivable that Li ions tend not to permeate through the covering layer during charging. Then, Li ions receive electrons at the surface of the covering layer and thereby Li metal becomes deposited. As a result, a three-layer structure ((negative electrode base material)/(covering layer) /(Li metal layer)) that is different from the prior art may be formed. With the Li metal layer strongly bonded to the covering layer, coming off of Li metal may be reduced. Hence, cycle endurance is expected to be improved.

It should be noted that when the Li-ion conductivity is below $1.0 \times 10^{-13}$ S/cm, capacity degradation can be facilitated. Hence, the Li-ion conductivity is equal to or more than $1.0 \times 10^{-13}$ S/cm.

2. The lithium metal negative electrode secondary battery according to "1" above may include the configuration described below, for example. The lithium-ion conductor includes a first component, a second component, and a third component.

The first component is Li.

The second component is at least one selected from the group consisting of Mg, Al, Ti, Zn, Zr, Nb, Mo, Ta, W, and a rare earth element.

The third component is at least one selected from the group consisting of B, N, O, Si, P, S, Ge, and a halogen.

3. The lithium metal negative electrode secondary battery according to "1" or "2" above may include the configuration described below, for example. The covering layer further includes a binder. A volume fraction of the binder relative to a sum of the lithium-ion conductor and the binder is 0.2 or more.

The volume fraction of the binder may be expressed in percentage. With the volume fraction of the binder being 0.2 or more (20% or more), peel strength of the Li metal layer is expected to be enhanced.

4. The lithium metal negative electrode secondary battery according to any one of" 1" to "3" above may include the configuration described below, for example. The lithium metal negative electrode secondary battery satisfies a relationship of the following expression (1-1).

$$0.3 \leq A_2/A_1 \leq 1.0 \qquad (1\text{-}1)$$

In the above expression (1-1), $A_1$ represents an area of a first region. $A_2$ represents an area of a second region.

The first region refers to a region of the surface of the negative electrode base material facing the positive electrode. The second region refers to a region of the first region that is covered with the covering layer.

Hereinafter, "$A_2/A_1$" in the above expression (1-1) is also called "a covering rate". The covering rate may be expressed in percentage. Satisfying the above expression (1-1) may be interpreted as the covering rate being from 30 to 100%. With the covering rate being from 30 to 100%, cycle endurance is expected to be improved.

5. The lithium metal negative electrode secondary battery according to any one of "1" to "4" above may include the configuration described below, for example. The covering layer has a thickness from 0.01 to 100 $\mu$m.

With the thickness of the covering layer being from 0.01 to 100 $\mu$m (being from 10 to 100000 nm), cycle endurance is expected to be improved.

6. The lithium metal negative electrode secondary battery according to any one of" 1" to "5" above may include the configuration described below, for example. The lithium-ion conductor includes lithium phosphate.

As described above, usually, $Li_3PO_4$ may have a Li-ion conductivity of about $1.0 \times 10^{-7}$ S/cm. In the present disclosure, the Li-ion conductivity of $Li_3PO_4$ may be adjusted to $2.0 \times 10^{-9}$ S/cm or less by subjecting $Li_3PO_4$ to, for example, a treatment that causes disturbance in the crystallinity of the particle surface.

7. The lithium metal negative electrode secondary battery according to any one of" 1" to "6" above may be an anode-free battery, for example.

With the lithium metal negative electrode secondary battery being an anode-free battery, energy density is expected to be enhanced, for example.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating the method of measuring Li-ion conductivity.
Fig. 2 is a conceptual view illustrating a Li metal negative electrode secondary battery according to the present embodiment.
Fig. 3 is a conceptual view illustrating a Li-ion conductor according to the present embodiment.
Fig. 4 is a first configuration example.
Fig. 5 is a second configuration example.
Fig. 6 is a third configuration example.
Fig. 7 is Table 1 showing evaluation results.
Fig. 8 is Table 2 showing evaluation results.
Fig. 9 is Table 3 showing evaluation results.
Fig. 10 is Table 4 showing evaluation results.
Fig. 11 is Table 5 showing evaluation results.
Fig. 12 is a conceptual view illustrating the position of Li metal deposition in No. 2.
Fig. 13 is a graph plotting the evaluation results of Fig. 7.
Fig. 14 is a graph plotting the evaluation results of Fig. 8.
Fig. 15 is a graph plotting the evaluation results of Fig. 9.

DESCRIPTION OF THE PREFERRED EMBODIMENTS

<Description of Terms>

A description will be provided for terms that are used in the present specification. Terms that are not described here may be described in the specification when the term is used.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

A singular form also includes its plural meaning, unless otherwise specified. For example, "a particle" may mean not only "one particle" but also "a plurality of particles (a particle group)" and "a group of particles (powder)".

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". "Not less than" and "not more than" are represented by an inequality symbol with an equality symbol, e.g., "$\leq$". "More than" and "less than" are represented by an inequality symbol without an equality symbol, e.g., "<". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. For example, the compound may be doped with a trace element. Some of Al and/or O may be replaced by another element.

"Derivative" refers to a compound that is derived from its original compound by at least one partial modification selected from the group consisting of substituent introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring. A derivative of a polymer compound (a resin material) may also be called "a modified product".

"Copolymer" includes at least one selected from the group consisting of unspecified-type, statistical-type, random-type, alternating-type, periodic-type, block-type, and graft-type.

"SOC (state of charge)" refers to the percentage of the charged capacity of the battery at a particular point in time relative to the full charge capacity of the battery.

"Lithium metal negative electrode secondary battery" refers to a battery in which negative electrode reaction includes Li metal dissolution/deposition reaction. For example, Li metal dissolution/deposition reaction may be responsible for 1 to 100%, or 25 to 100%, or 50 to 100%, or 75 to 100% of the negative electrode capacity. The negative electrode capacity exhibits reversible capacity loss. For example, at an SOC from 1 to 100%, or from 1 to 75%, or from 1 to 50%, or from 1 to 25%, Li metal may be deposited on the negative electrode. At an SOC of 0% (at a fully discharged state), Li metal may be fully dissolved in the electrolyte solution. At an SOC of 0%, Li metal may partially remain at the negative electrode.

Usually, Li metal deposition in a Li-ion secondary battery may cause irreversible capacity loss. For example, Li metal deposition in a Li-ion secondary battery is an unintended reaction. For example, Li metal deposition in a Li-ion secondary battery may occur under abnormal conditions, at the time of improper use, and/or the like.

In "an anode-free battery", no Li metal is present at the negative electrode before initial charging (after assembly and before first-time charging). An anode-free battery is assembled in a state where the negative electrode does not include Li metal (a negative electrode active material). At the time of initial charging, Li is supplied from the positive electrode to the negative electrode, and thereby, for the first time, Li metal becomes deposited on the negative electrode. In an anode-free battery, at a fully discharged state, Li metal may be fully dissolved.

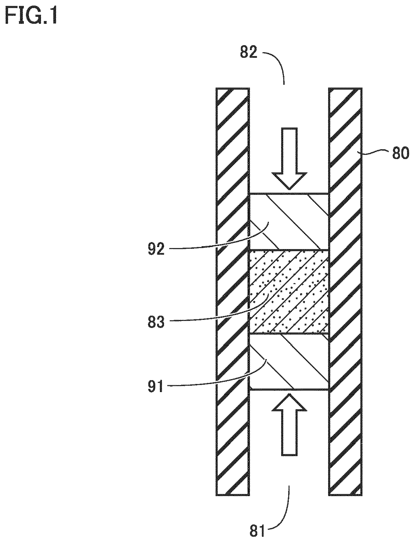

"Li-ion conductivity" is measured by the procedure described below. Fig. 1 is a conceptual view illustrating the method of measuring Li-ion conductivity. A cylinder jig 80 is prepared. Cylinder jig 80 has a first open end face 81 and a second open end face 82. The interior wall of cylinder jig 80 has been subjected to insulation treatment. A first piston 91 and a second piston 92 are prepared. Each of first piston 91 and second piston 92 is made of stainless steel (SUS). Through first open end face 81, first piston 91 is inserted. A sample 83 (powder of a Li-ion conductor) is loaded into cylinder jig 80 above first piston 91. Through second open end face 82, second piston 92 is inserted. First piston 91 and second piston 92 are pushed so that a pressure of 5 tf/cm$^2$ (490 MPa) is applied to sample 83. Due to the pressure, sample 83 may be shaped into a disk-shaped pellet. Alternatively, sample 83 may be shaped into a cylindrical pellet. To each of first piston 91 and second piston 92, a current voltage terminal is connected. Alternating-current impedance is measured with an impedance analyzer (manufactured by Solartron, for example). The temperature at the time of measurement is 25°C. On a Cole-Cole plot, from the point of intersection of the semicircle and the real axis (the horizontal axis), resistance is determined. By the following equation (1-2), Li-ion conductivity is determined.

$$\sigma=1/\{(R\times A)/T)\} \qquad (1\text{-}2)$$

σ: Li-ion conductivity
R: Resistance determined from alternating-current impedance
A: Bottom area of sample 83 (disk-shaped pellet)
T: Thickness (height) of sample 83 (disk-shaped pellet)

"Covering rate" is measured by the procedure described below. The Li metal negative electrode secondary battery is discharged and thereby Li metal is fully dissolved. After discharged, the Li metal negative electrode secondary battery is disassembled, and the negative electrode is collected. The negative electrode includes a negative electrode base material and a covering layer. By SEM-EDS (Scanning Electron Microscope Energy Dispersive x-ray Spectroscopy), flat-plane observation of the covering layer is carried out. The magnification for the observation is from 500 to 10000 times, for example. Within the image obtained by the observation, elemental mapping analysis is carried out. The region subjected to analysis (the analysis region) is rectangular. The size of the analysis region is 400 $\mu$m$\times$400 $\mu$m, for example. The area of the analysis region is regarded as the area of the first region ($A_1$). The elemental mapping image is subjected to image analysis to determine the number of pixels attributable to a Li-ion conductor. The number of pixels is converted into area to determine the area of the second region ($A_2$). $A_2$ is divided by $A_1$ to determine the covering rate.

"Average particle size" refers to a particle size in volume-based particle size distribution (cumulative distribution) at which the cumulative value reaches 50%. The particle size may also be called "D50". The average particle size may be measured by laser diffraction.

<Li Metal Negative Electrode Secondary Battery>

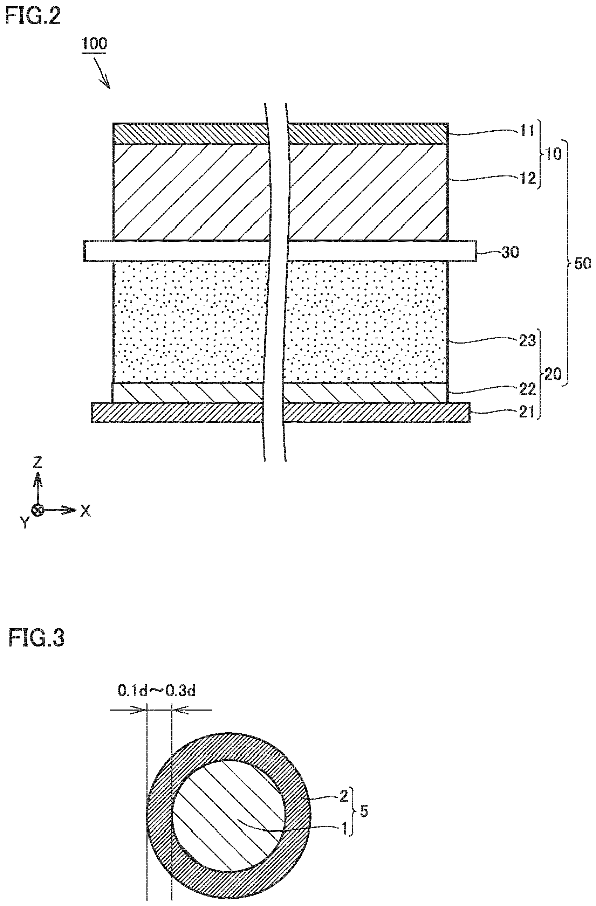

Fig. 2 is a conceptual view illustrating a Li metal negative electrode secondary battery according to the present embodiment. A battery 100 includes a power generation element 50 and an electrolyte solution (not illustrated).

<Exterior Package>

Battery 100 may include an exterior package (not illustrated). The exterior package may accommodate power generation element 50 and an electrolyte solution. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of battery 100.

<Power Generation Element>

Power generation element 50 includes a positive electrode 10, a negative electrode 20, and a separator 30. Separator 30 is interposed between positive electrode 10 and negative electrode 20. Power generation element 50 may have any configuration. For example, power generation element 50 may be a stack-type one. For example, positive electrode 10 and negative electrode 20 may be alternately stacked with separator 30 interposed between positive electrode 10 and negative electrode 20 to form power generation element 50. For example, separator 30 having a belt-like shape may be folded into a Z-shape, and at each turn of separator 30, positive electrode 10 and negative electrode 20 may be placed alternately. For example, power generation element 50 may be a wound-type one. For example, each of positive electrode 10, negative electrode 20, and separator 30 may have a belt-like shape. For example, positive electrode 10, separator 30, and negative electrode 20 may be stacked in this order to form a stack. The resulting stack may be wound spirally to form power generation element 50. After being wound, the wound power generation element 50 may be shaped into a flat form.

<Negative Electrode>

Negative electrode 20 includes a negative electrode base material 21 and a covering layer 22. At an SOC above 0%, negative electrode 20 further includes a Li metal layer 23. As the SOC increases or decreases, the thickness of Li metal layer 23 also increases or decreases.

Negative electrode base material 21 is electrically conductive. Negative electrode base material 21 may function as a current collector. Negative electrode base material 21 may have a thickness from 5 to 50 $\mu$m, for example. Negative electrode base material 21 may include a metal foil, a metal porous body, and/or the like, for example. Negative electrode base material 21 may include at least one selected from the group consisting of Cu, Ni, Fe, Zn, Pb, Ag, and Au, for example. Negative electrode base material 21 may include a Cu foil, a Cu alloy foil, and/or the like, for example.

<Covering Layer>

Covering layer 22 covers at least part of the surface of negative electrode base material 21. Covering layer 22 includes a Li-ion conductor. The Li-ion conductor has a low Li-ion conductivity. Because Li ions tend not to permeate through covering layer 22, Li metal layer 23 may grow on covering layer 22. In other words, battery 100 is configured in such a manner that covering layer 22 is interposed between Li metal layer 23 and negative electrode base material 21 at an SOC of 100%. With covering layer 22 interposed between Li metal layer 23 and negative electrode base material 21, cycle endurance is expected to be improved.

The covering rate by covering layer 22 may be from 0.2 to 1 (from 20 to 100%), or from 0.3 to 1 (from 30 to 100%), for example. With the covering rate being from 0.3 to 1, cycle endurance is expected to be improved. The covering rate may be 0.5 or more, or 0.6 or more, or 0.8 or more, for example. The covering rate may be 0.8 or less, or 0.6 or less, or 0.5 or less, for example.

Covering layer 22 may have a thickness from 0.001 to 150 $\mu$m, or from 0.01 to 100 $\mu$m, for example. With the thickness of covering layer 22 being from 0.01 to 100 $\mu$m, cycle endurance is expected to be improved. The thickness of covering layer 22 may be 0.1 $\mu$m or more, or 1 $\mu$m or more, or 10 $\mu$m or more, or 50 $\mu$m or more, for example. The thickness of covering layer 22 may be 50 $\mu$m or less, or 10 $\mu$m or less, or 1 $\mu$m or less, or 0.1 $\mu$m or less, for example.

<Binder>

Covering layer 22 may further include a binder. The volume fraction of the binder relative to the sum of the Li-ion conductor and the binder may be 0.2 or more (20% or more), for example. That is, covering layer 22 may include the binder in a volume fraction of 20% or more, with the remainder being made up of the Li-ion conductor. With the volume fraction of the binder being 0.2 or more, peel strength of Li metal layer 23 is expected to be enhanced. The volume fraction of the binder may be 0.25 or more, or 0.3 or more, or 0.4 or more, or 0.5 or more, for example. The volume fraction of the binder may be 0.5 or less, or 0.4 or less, or 0.3 or less, or 0.25 or less, for example.

The binder may include any component. The binder may include a material that may be swollen with the electrolyte solution, for example. The binder may include, for example, at least one selected from the group consisting of polyvinylidene difluoride (PVDF), vinylidene difluoride-hexafluoropropylene copolymer (PVDF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, styrene-butadiene rubber (SBR), acrylate butadiene rubber (ABR), polyacrylonitrile (PAN), and derivatives of these.

Covering layer 22 may have a monolayer structure. That is, covering layer 22 may consist of a single layer. In this single layer, the Li-ion conductor and the binder may coexist. For example, a mixture of the Li-ion conductor and a binder solution may be applied to the surface of negative electrode base material 21 to form a single layer including the Li-ion conductor and the binder.

Covering layer 22 may have a multilayer structure. For example, covering layer 22 may include a first layer and a second layer. The first layer may include the binder. The second layer may include the Li-ion conductor. For example, a binder solution may be applied to the surface of negative electrode base material 21 to form the first layer. For example, the Li-ion conductor (powder) may be applied to the surface of the first layer to form the second layer. For example, the Li-ion conductor may be sprayed to the surface of the first layer to form the second layer.

<Li-Ion Conductor>

The Li-ion conductor has a Li-ion conductivity of $1.0 \times 10^{-13}$ to $2.0 \times 10^{-9}$ S/cm. With the Li-ion conductivity being from $1.0 \times 10^{-13}$ to $2.0 \times 10^{-9}$ S/cm, cycle endurance is expected to be improved. The Li-ion conductivity may be $1.0 \times 10^{-12}$ S/cm or more, or $1.0 \times 10^{-11}$ S/cm or more, or $1.0 \times 10^{-10}$ S/cm or more, for example. The Li-ion conductivity may be $1.0 \times 10^{-10}$ S/cm or less, or $1.0 \times 10^{-11}$ S/cm or less, or $1.0 \times 10^{-12}$ S/cm or less, for example.

The Li-ion conductor is solid. The Li-ion conductor may be a particle group. The Li-ion conductor may have an average particle size from 100 to 3000 nm (from 0.1 to 3 $\mu$m), or from 200 to 2000 nm, or from 300 to 1500 nm, for example. The average particle size of the Li-ion conductor may be 500 nm or more, or 1000 nm or more, or 1300 nm or more, for example. The average particle size of the Li-ion conductor may be 1300 nm or less, or 1000 nm or less, or 500 nm or less, for example.

As long as having a Li-ion conductivity of $1.0 \times 10^{-13}$ to $2.0 \times 10^{-9}$ S/cm, the Li-ion conductor may have any composition. The Li-ion conductor may include a first component, a second component, and a third component, for example. The first component is Li.

The second component is at least one selected from the group consisting of Mg, Al, Ti, Zn, Zr, Nb, Mo, Ta, W, and a rare earth element. The "rare earth element" may include lanthanoid, for example. The rare earth element may include, for example, at least one selected from the group consisting of Sc, Y, La, Ce, Pr, Nd, Pm, Sm, Eu, Gd, Tb, Dy, Ho, Er, Tm, Yb, and Lu.

The third component is at least one selected from the group consisting of B, N, O, Si, P, S, Ge, and a halogen. The "halogen" may include, for example, at least one selected from the group consisting of F, Cl, Br, and I.

The Li-ion conductor may include a phosphoric acid compound, for example. The Li-ion conductor may include $Li_3PO_4$, for example.

The Li-ion conductor may include a nitride phosphate compound (LIPON), for example. The Li-ion conductor may have a composition of the following formula (1-3), for example.

$$Li_xPO_yN_z \qquad (1\text{-}3)$$

In the above formula (1-3), x may satisfy the relationship of $2 \le x < 3$, for example. y may satisfy the relationship of $3 \le y < 4$, for example. z may satisfy the relationship of $0.1 < z < 0.5$, for example.

The Li-ion conductor may be of NASICON type, for example. The Li-ion conductor may have a composition of the following formula (1-4), for example.

$$Li_{1+x}Al_xM_{2-x}(PO_4)_3 \qquad (1\text{-}4)$$

In the above formula (1-4), M is at least one selected from the group consisting of Ti and Ge. x satisfies the relationship of $0 \le x \le 2$.

The Li-ion conductor may have a composition of the following formula (1-5), for example.

$$Li_{1-x}Al_xM_{2-x}(PO_4)_3 \qquad (1\text{-}5)$$

In the above formula (1-5), M is at least one selected from the group consisting of Ti and Ge. x satisfies the relationship of $0.3 \le x \le 0.4$.

The Li-ion conductor may include a composite oxide, for example. The Li-ion conductor may include at least one selected from the group consisting of $LiNbO_3$, $Li_2WO_4$, $Li_3BO_3$, $LiBO_2$, $Li_2SO_4$, $Li_2SO_3$, $Li_2TiO_3$, $Li_2Ti_2O_5$, $Li_2MoO_4$, $Li_2ZrO_3$, and $LiAlO_2$, for example.

The Li-ion conductor may include a garnet-type oxide, for example. The Li-ion conductor may have a composition of the following formula (1-6), for example.

$$Li_{7-x}M^1Zr_{2-x}M^2{}_yO_{12} \qquad (1\text{-}6)$$

In the above formula (1-6), $M^1$ is a rare earth element. $M^1$ may be La, for example. $M^2$ is at least one selected from the group consisting of Mg, Nb, and Ta, for example. x may satisfy the relationship of $0 \le x \le 1$, for example. y may satisfy the relationship of $0 \le y \le 1$, for example.

The Li-ion conductor may include a perovskite-type oxide, for example. The Li-ion conductor may have a composition of the following formula (1-7), for example.

$$Li_{3x}La_{0.66-x}TiO_3 \qquad (1\text{-}7)$$

In the above formula (1-7), x may satisfy the relationship of $0 < x < 0.66$, for example.

The Li-ion conductor may have a composition of the following formula (1-8), for example.

$$Li_{3x}La_{0.33-x}NbO_3 \qquad (1\text{-}8)$$

In the above formula (1-8), x may satisfy the relationship of $0 < x < 0.33$, for example.

The Li-ion conductor may include an inverted-perovskite-type compound, for example. The Li-ion conductor may have a composition of the following formula (1-9), for example.

$$Li_{3-x}(OH_x)Cl \qquad (1\text{-}9)$$

In the above formula (1-9), x may satisfy the relationship of $0 \le x \le 1$, for example.

The Li-ion conductor may be of LISICON type, for example. The Li-ion conductor may have a composition of the following formula (1-10), for example.

$$Li_{2+2x}Zn_{1-x}GeO_4 \qquad (1\text{-}10)$$

In the above formula (1-10), x may satisfy the relationship of -0.36<x<0.87, for example.

The Li-ion conductor may include an oxide glass, for example. The oxide glass may be glass ceramic (partially crystallized glass). The glass may be a solid solution. For example, the composition of the glass may be expressed as its raw material composition. For example, "$Li_2O$-$Al_2O_3$-$SiO_2$-$P_2O_5$-$TiO_2$" represents a material produced by mixing $Li_2O$, $Al_2O_3$, $SiO_2$, $P_2O_5$, and $TiO_2$ in a freely-selected molar ratio. The mixing ratio may be expressed with the number placed in front of each raw material. For example, "$50Li_4SiO_4$-$50Li_3BO_3$" means that the mixing ratio is "$Li_4SiO_4/Li_3BO_3$=50/50 (molar ratio)". The raw material of the glass may include at least one selected from the group consisting of $Li_2O$, $Al_2O_3$, $SiO_2$, $P_2O_5$, $TiO_2$, $Li_2SO_4$, $Li_3BO_3$, $Li_3BO_4$, $Li_4SiO_4$, and $Li_3PO_4$, for example. The Li-ion conductor may include at least one selected from the group consisting of $Li_2O$-$Al_2O_3$-$SiO_2$-$P_2O_5$-$TiO_2$, $Li_2SO_4$-$Li_3BO_3$, $Li_3BO_4$-$Li_4SiO_4$, and $Li_3PO_4$-$Li_3BO_3$, for example.

The Li-ion conductor may include a sulfide, a halide, and/or the like, for example. The sulfide may be glass, glass ceramic, argyrodite, and/or the like, for example. The Li-ion conductor may include at least one selected from the group consisting of $Li_{10}GeP_2S_{12}$, $Li_7P_3S_{11}$, $Li_{3.25}Ge_{0.25}P_{0.75}S_4$, $Li_{3.25}P_{0.95}S_4$, $Li_6PS_5Cl$, $LiI$, $B_2S_3$, $Li_2S$, and $Si_2S_2$, for example. The Li-ion conductor may include at least one selected from the group consisting of $Li_2S$-$B_2S_3$-$LiI$, $Li_2S$-$Si_2S_2$-$LiI$, and $Li_2S$-$Si_2S_2$-$Li_4SiO_4$, for example.

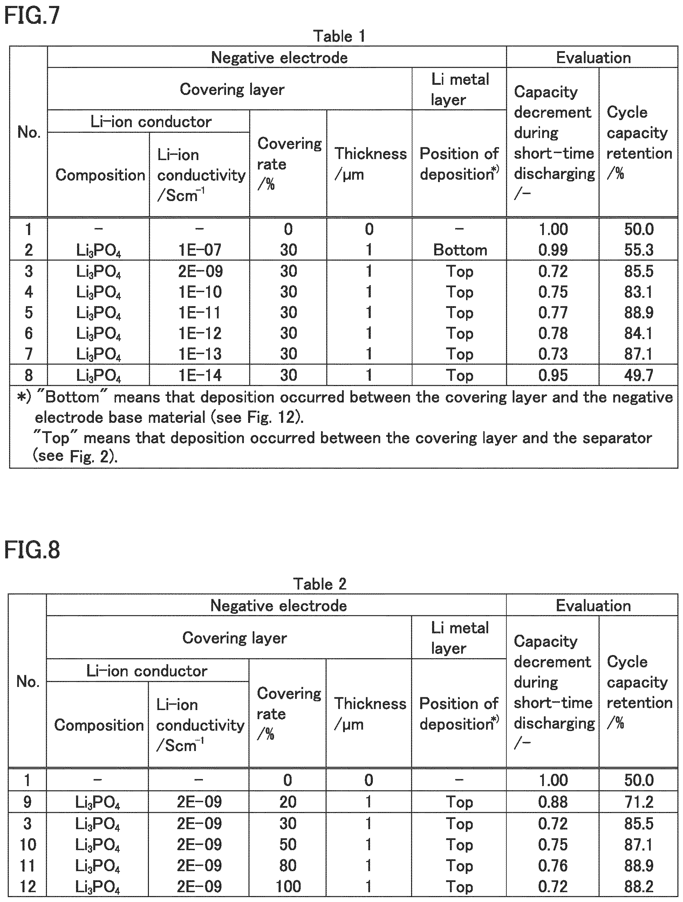

The Li-ion conductor may include at least one selected from the materials listed in Fig. 7 to Fig. 11, for example.

<Method for Adjusting Li-Ion Conductivity>

Usually, the Li-ion conductor having the composition described above has a Li-ion conductivity of $10^{-5}$ S/cm or more. In order to achieve a Li-ion conductivity from $1.0 \times 10^{-13}$ to $2.0 \times 10^{-9}$ S/cm, the Li-ion conductivity is reduced. For example, the Li-ion conductor may be subjected to pulverization treatment and sintering treatment that are repeated alternately. The pulverization treatment may be carried out with a mechanochemical apparatus and/or the like, for example. The sintering treatment may be carried out at a low temperature. The sintering temperature may be about 200°C, for example.

Fig. 3 is a conceptual view illustrating a Li-ion conductor according to the present embodiment. In Fig. 3, a cross section of the Li-ion conductor (a particle 5) is conceptually illustrated. Particle 5 may include a central portion 1 and a surface layer portion 2. Surface layer portion 2 surrounds central portion 1. Due to the alternate repetition of pulverization treatment and sintering treatment, the crystallinity of surface layer portion 2 may be disturbed. Due to the disturbance of the crystallinity of surface layer portion 2, the Li-ion conductivity of particle 5 may be decreased. That is, the crystallinity of surface layer portion 2 may become lower than that of central portion 1. The crystallinity of central portion 1 and surface layer portion 2 may be evaluated by micro XRD (micro X-Ray Diffraction) and/or the like, for example. In a cross section of particle 5, the width of surface layer portion 2 may be from 0.1d to 0.3d (0.1 to 0.3 times of d), for example. "d" refers to the average particle size of the Li-ion conductor.

<Positive Electrode>

Positive electrode 10 may be in sheet form, for example. Positive electrode 10 may include a positive electrode base material 11 and a positive electrode active material layer 12, for example. Positive electrode base material 11 is electrically conductive. Positive electrode base material 11 may function as a current collector. Positive electrode base material 11 supports positive electrode active material layer 12. Positive electrode base material 11 may be in sheet form, for example. Positive electrode base material 11 may have a thickness from 5 to 50 $\mu$m, for example. Positive electrode base material 11 may include a metal foil, for example. Positive electrode base material 11 may include at least one selected from the group consisting of Al, Mn, Ti, Fe, and Cr, for example. Positive electrode base material 11 may include an Al foil, an Al alloy foil, a Ti foil, an SUS foil, and/or the like, for example.

Between positive electrode base material 11 and positive electrode active material layer 12, an intermediate layer (not illustrated) may be formed. The intermediate layer does not include a positive electrode active material. The intermediate layer may have a thickness from 0.1 to 5 $\mu$m, for example. The intermediate layer may include a conductive material, an insulation material, a binder, and/or the like, for example. The conductive material and the binder are described below. The insulation material may include alumina, boehmite, aluminum hydroxide, and/or the like, for example.

Positive electrode active material layer 12 is placed on the surface of positive electrode base material 11. Positive electrode active material layer 12 may be placed on only one side of positive electrode base material 11. Positive electrode active material layer 12 may be placed on both sides of positive electrode base material 11. Positive electrode active material layer 12 may have a thickness from 10 to 1000 $\mu$m, or from 50 to 500 $\mu$m, or from 100 to 300 $\mu$m, for example. Positive electrode active material layer 12 includes a positive electrode active material. Positive electrode active material layer 12 may further include a conductive material, a binder, and the like, for example.

The conductive material may form an electron conduction path inside the positive electrode active material layer 12. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, acetylene black (AB), Ketjenblack (registered trademark), vapor grown carbon fiber (VGCF), carbon nanotube (CNT), and graphene flake (GF).

The binder is capable of fixing positive electrode active material layer 12 to positive electrode base material 11. The amount of the binder to be used may be, for example, from 0.1 to 10 parts by mass relative to 100 parts by mass of the positive electrode active material. The binder may include any component. The binder may include, for example, at least one selected from the group consisting of PVDF, PVDF-HFP, PTFE, CMC, PAA, PVA, PVP, polyoxyethylene alkyl ether, and derivatives of these.

Positive electrode active material layer 12 may further include an inorganic filler, an organic filler, a solid electrolyte, a surface modifier, a lubricant, a flame retardant, a protective agent, a flux, a coupling agent, an adsorbent, and/or the like, for example. Positive electrode active material layer 12 may include polyoxyethylene allylphenyl ether phosphate, zeolite, a silane coupling agent, $MoS_2$, $WO_3$, and/or the like, for example.

The positive electrode active material may be in particle form, for example. The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

The transition metal oxide may have any crystal structure. For example, the transition metal oxide may include a crystal structure that belongs to a space group R-3m and/or the like. For example, a compound represented by the general formula "$LiMO_2$" may have a crystal structure that belongs to a space group R-3m. The transition metal oxide may be represented by the following formula (2-1), for example.

$$Li_{1-a}Ni_xM_{1-x}O_2 \qquad (2\text{-}1)$$

In the above formula (2-1), M may include, for example, at least one selected from the group consisting of Co, Mn, and Al. For example, the relationships of $-0.5 \leq a \leq 0.5$, $0 < x \leq 1$ may be satisfied.

For example, the relationship of $-0.4 \leq a \leq 0.4$, $-0.3 \leq a \leq 0.3$, $-0.2 \leq a \leq 0.2$, or $-0.1 \leq a \leq 0.1$ may be satisfied.

For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied.

The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

The transition metal oxide may be represented by the following formula (2-2), for example. A compound represented by the following formula (2-2) may also be called "NCM".

$$Li_{1-a}Ni_xCo_yMn_zO_2 \qquad (2\text{-}2)$$

In the above formula (2-2), the relationships of $-0.5 \leq a \leq 0.5$, $0 \leq x \leq 1$, $0 < y < 1$, $0 < z < 1$, $x+y+z=1$ may be satisfied, for example.

For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied.

For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied.

For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

The transition metal oxide may be represented by the following formula (2-3), for example. A compound represented by the following formula (2-3) may also be called "NCA".

$$Li_{1-a}Ni_xCo_yAl_zO_2 \qquad (2\text{-}3)$$

In the above formula (2-3), the relationships of $-0.5 \leq a \leq 0.5$, $0 \leq x \leq 1$, $0 < y < 1$, $0 < z < 1$, $x+y+z=1$ may be satisfied, for example.

For example, the relationship of $0<x\leq0.1$, $0.1\leq x\leq0.2$, $0.2\leq x\leq0.3$, $0.3\leq x\leq0.4$, $0.4\leq x\leq0.5$, $0.5\leq x\leq0.6$, $0.6\leq x\leq0.7$, $0.7\leq x\leq0.8$, $0.8\leq x\leq0.9$, or $0.9\leq x<1$ may be satisfied.

For example, the relationship of $0<y\leq0.1$, $0.1\leq y\leq0.2$, $0.2\leq y\leq0.3$, $0.3\leq y\leq0.4$, $0.4\leq y\leq0.5$, $0.5\leq y\leq0.6$, $0.6\leq y\leq0.7$, $0.7\leq y\leq0.8$, $0.8\leq y\leq0.9$, or $0.9\leq y<1$ may be satisfied.

For example, the relationship of $0<z\leq0.1$, $0.1\leq z\leq0.2$, $0.2\leq z\leq0.3$, $0.3\leq z\leq0.4$, $0.4\leq z\leq0.5$, $0.5\leq z\leq0.6$, $0.6\leq z\leq0.7$, $0.7\leq z\leq0.8$, $0.8\leq z\leq0.9$, or $0.9\leq z<1$ may be satisfied.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

The positive electrode active material may include two or more NCMs and/or the like, for example. The positive electrode active material may include NCM $(0.6\leq x)$ and NCM $(x<0.6)$, for example. "NCM $(0.6\leq x)$" refers to a compound in which x (Ni ratio) in the above formula (2-2) is 0.6 or more. NCM $(0.6\leq x)$ may also be called "a high-nickel material", for example. NCM $(0.6\leq x)$ includes $LiNi_{0.8}Co_{0.1}Mn_{0.1}O_2$ and/or the like, for example. "NCM$(x<0.6)$" refers to a compound in which x (Ni ratio) in the above formula (2-2) is less than 0.6. NCM $(x<0.6)$ includes $LiNi_{1/3}Co_{1/3}Mn_{1/3}O_2$ and/or the like, for example. The mixing ratio (mass ratio) between NCM $(0.6\leq x)$ and NCM $(x<0.6)$ may be "NCM $(0.6\leq x)$/NCM $(x<0.6)$=9/1 to 1/9", or "NCM $(0.6\leq x)$/NCM $(x<0.6)$=9/1 to 4/6", or "NCM $(0.6\leq x)$/NCM $(x<0.6)$=9/1 to 3/7", for example.

The positive electrode active material may include NCA and NCM, for example. The mixing ratio (mass ratio) between NCA and NCM may be "NCA/NCM=9/1 to 1/9", "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

The transition metal oxide may include a crystal structure that belongs to a space group C2/m and/or the like, for example. The transition metal oxide may be represented by the following formula (2-4), for example.

$$Li_2MO_3 \qquad (2\text{-}4)$$

In the above formula (2-4), M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

The transition metal oxide may include a crystal structure that belongs to a space group Fd-3m, and/or the like, for example. The transition metal oxide may be represented by, for example, the following formula (2-5):

$$LiMn_{2-x}M_xO_4 \qquad (2\text{-}5)$$

In the above formula (2-5), M may include, for example, at least one selected from the group consisting of Ni, Fe, and Zn. For example, the relationship of $0\leq x\leq2$ may be satisfied.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2$/$LiM_2O_4$=9/1 to 9/1", "$LiMO_2$/$LiM_2O_4$=9/1 to 5/5", or "$LiMO_2$/$LiM_2O_4$=9/1 to 7/3", for example.

The polyanion compound may include a phosphoric acid salt (such as $LiFePO_4$ for example), a silicic acid salt, a boric acid salt, and/or the like, for example. The polyanion compound may be represented by the following formulae (2-6) to (2-9), for example.

$$LiMPO_4 \qquad (2\text{-}6)$$

$$Li_{2-x}MPO_4F \qquad (2\text{-}7)$$

$$Li_2MSiO_4 \qquad (2\text{-}8)$$

$$LiMBO_3 \qquad (2\text{-}9)$$

In the above formulae (2-6) to (2-9), M may include, for example, at least one selected from the group consisting of Fe, Mn, Co. In the above formula (2-7), the relationship of $0\leq x\leq2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound

may be "LiMO$_2$/(polyanion compound) =9/1 to 9/1", "LiMO$_2$/(polyanion compound) =9/1 to 5/5", or "LiMO$_2$/(polyanion compound) =9/1 to 7/3", for example.

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added. For example, to NCM, Ti may be added. For example, to NCM, a combination of "Zr, W", a combination of "Si, W", or a combination of "Zr, W, Al, Ti, Co" may be added.

Positive electrode 10 may include a composite particle. The composite particle includes a core particle and a shell layer. The core particle includes a positive electrode active material. The shell layer covers at least part of the surface of the core particle. The shell layer may have a thickness from 1 to 3000 nm, or from 5 to 2000 nm, or from 10 to 1000 nm, or from 10 to 100 nm, or from 10 to 50 nm, for example. The thickness of the shell layer may be measured in an SEM image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the shell layer is measured in twenty fields of view. The arithmetic mean of a total of 200 thickness measurements is used.

The ratio of the part of the surface of the core particle covered by the shell layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample (powder) is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (2-10), the covering rate is determined.

$$\theta = \{I_1/(I_0+I_1)\} \times 100 \qquad (2\text{-}10)$$

$\theta$: Covering rate [%]
$I_0$: Ratio of element attributable to core particle
$I_1$: Ratio of element attributable to shell layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the shell layer includes P and B, $I_1$ represents the total ratio of the elements "P, B".

The shell layer may include any component. The shell layer may include an elementary substance, organic matter, an inorganic acid salt, an organic acid salt, a hydroxide, an oxide, a carbide, a nitride, a sulfide, a halide, and/or the like, for example. The shell layer may include, for example, at least one selected from the group consisting of B, Al, W, Zr, Ti, Co, F, lithium compound (such as Li$_2$CO$_3$, LiHCOs, LiOH, Li$_2$O, for example), tungsten oxide (such as WO$_3$, for example), titanium oxide (such as TiO$_2$, for example), zirconium oxide (such as ZrO$_2$, for example), boron oxide, boron phosphate (such as BPO$_4$, for example), aluminum oxide (such as Al$_2$O$_3$, for example), boehmite, aluminum hydroxide, phosphoric acid salt [such as Li$_3$PO$_4$, (NH$_4$)$_3$PO$_4$, AlPO$_4$, for example], boric acid salt (such as Li$_2$B$_4$O$_7$, LiBO$_3$, for example), polyacrylic acid salt (such as Li salt, Na salt, NH$_4$ salt), acetic acid salt (such as Li salt, for example), CMC (such as Na salt, Li salt, NH$_4$ salt), LiNbO$_3$, Li$_2$TiO$_3$, and Li-containing halide (such as LiAlCl$_4$, LiTiAlF$_6$, LiYBr$_6$, LiYCl$_6$, for example).

Each of "a hollow particle" and "a solid particle" is a secondary particle (an aggregate of primary particles). In a cross-sectional image of "a hollow particle", the proportion of the area of the central cavity relative to the entire cross-sectional area of the particle is 30% or more. The proportion of the cavity in the hollow particle may be 40% or more, or 50% or more, or 60% or more, for example. In a cross-sectional image of "a solid particle", the proportion of the area of the central cavity relative to the entire cross-sectional area of the particle is less than 30%. The proportion of the cavity in the solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

The positive electrode active material may have a unimodal particle size distribution (based on the number), for example. The positive electrode active material may have a multimodal particle size distribution, for example. The positive electrode active material may have a bimodal particle size distribution, for example. That is, the positive electrode active material may include "large particles" and "small particles". When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. ds may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles (Ss) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From positive electrode active material layer 12, a plurality of cross-sectional samples are taken. The cross-sectional sample may include a cross section vertical to the surface of positive electrode active material layer 12, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM (0.6≤x) and the small particles may be NCM (x<0.6).

<Electrolyte Solution>

The electrolyte solution is a liquid electrolyte. The electrolyte solution includes Li ions. The electrolyte solution may include a solute and a solvent, for example.

The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. The solute includes a supporting salt (a Li salt). The solute may include an inorganic acid salt, an imide salt, an oxalato complex, a halide, and/or the like, for example. The solute may include, for example, at least one selected from the group consisting of $LiPF_6$, $LiBF_4$, $LiClO_4$, $LiAsF_6$, $LiSbF_6$, $LiN(SO_2F)_2$ which has the common name "LiFSI", $LiN(SO_2CF_3)_2$ which has the common name "LiTFSI", $LiB(C_2O_4)_2$ which has the common name "LiBOB", $LiBF_2(C_2O_4)$ which has the common name "LiDFOB", $LiPF_2(C_2O_4)_2$ which has the common name "LiDFOP", $LiPO_2F_2$, $FSO_3Li$, LiI, LiBr, and derivatives of these.

The electrolyte solution may include an ether-based solvent, for example. The solvent may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), ethylglyme, triglyme, tetraglyme, hydrofluoroether (HFE), and derivatives of these.

HFE may include, for example, at least one selected from the group consisting of a difluoromethyl group, a 2,2-difluoroethyl group, a 2,2,2-trifluoroethyl group, a 1,1,2,2-tetrafluoroethyl group, a 2,2,3,3,3-pentafluoropropyl group, a 2,2,3,3-tetrafluoropropyl group, a 1,1,1,3,3,3-hexafluoroisopropyl group, a 1,1,2,3,3,3-hexafluoropropyl group, a 2,2,3,3,4,4,4-heptafluorobutyl group, a 2,2,3,3,4,4-hexafluorobutyl group, and a 2,2,3,3,4,4,5,5-octafluoropentyl group.

HFE may include, for example, at least one selected from the group consisting of 1,1,2,2-tetrafluoroethyl 2,2,3,3-tetrafluoropropyl ether, 2,2,2-trifluoroethyl ether, difluoromethyl 2,2,3,3-tetrafluoropropyl ether, 2,2,3,3-tetrafluoropropyl 1,1,2,3,3,3-hexafluoropropyl ether, 2,2,3,3,4,4,5,5-octafluoropentyl 1,1,2,2-tetrafluoroethyl ether, and derivatives of these.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (3-1), for example.

$$V_{EC}+V_{FEC}+V_{EMC}+V_{DMC}+V_{DEC}=10 \qquad (3\text{-}1)$$

In the above equation (3-1), $V_{EC}$, $V_{FEC}$, $V_{EMC}$, $V_{DMC}$, and $V_{DEC}$ represent the volume ratios of EC, FEC, EMC, DMC, and DEC, respectively.

For example, the relationships of $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, and $6 \leq V_{EMC}+V_{DMC}+V_{DEC} \leq 9$ may be satisfied.

In the above equation (3-1),

the relationship of $1 \leq V_{EC} \leq 2$ or $2 \leq V_{EC} \leq 3$ may be satisfied, for example;
the relationship of $1 \leq V_{FEC} \leq 2$ or $2 \leq V_{FEC} \leq 4$ may be satisfied, for example;
the relationship of $3 \leq V_{EMC} \leq 4$ or $6 \leq V_{EMC} \leq 8$ may be satisfied, for example;
the relationship of $3 \leq V_{DMC} \leq 4$ or $6 \leq V_{DMC} \leq 8$ may be satisfied, for example; and
the relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as the additive (a trace component). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

The electrolyte solution may include an ionic liquid. The electrolyte solution may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

Battery 100 may include a gelled electrolyte. The gelled electrolyte includes an electrolyte solution and a polymer material. The polymer material may form a polymer matrix. The polymer material may include, for example, at least one selected from the group consisting of PVDF, PVdF-HFP, PAN, PVdF-PAN, polyethylene oxide (PEO), polyethylene glycol (PEG), and derivatives of these.

<Separator>

Separator 30 is electrically insulating. Separator 30 may include, for example, at least one selected from the group consisting of a resin film, an inorganic particle layer, and an organic particle layer. Separator 30 may include a resin film and an inorganic particle layer, for example.

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows the electrolyte solution to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a urethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), and polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

The inorganic particle layer may be formed on the surface of the resin film. The inorganic particle layer may be formed on only one side of the resin film, or may be formed on both sides of the resin film. The inorganic particle layer may be formed on the side facing positive electrode 10, or may be formed on the side facing negative electrode 20.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

Separator 30 may include an organic particle layer, for example. Separator 30 may include an organic particle layer instead of the resin film, for example. Separator 30 may include an organic particle layer instead of the inorganic particle layer, for example. Separator 30 may include both the resin film and an organic particle layer. Separator 30 may include both the inorganic particle layer and an organic particle layer. Separator 30 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 30 may include a mixed layer, for example. The mixed layer includes both inorganic particles and organic particles.

<Battery Configuration Example>

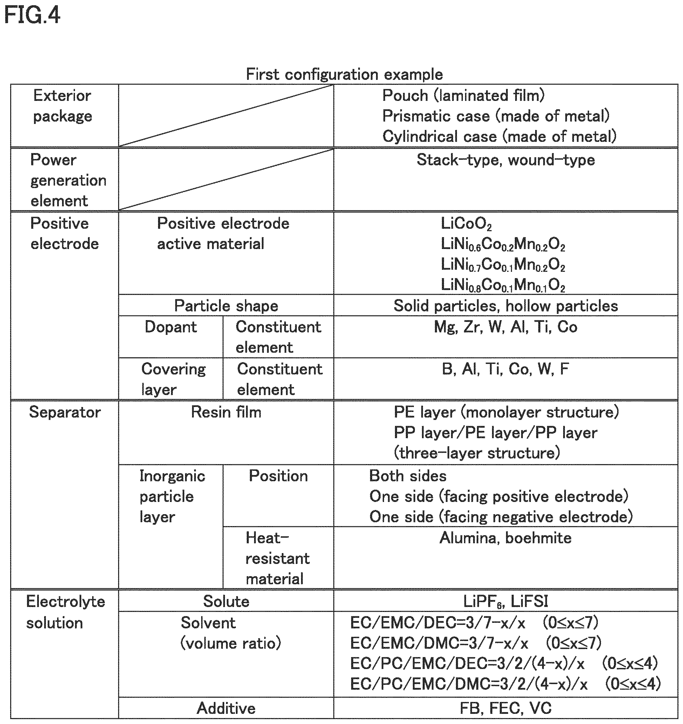

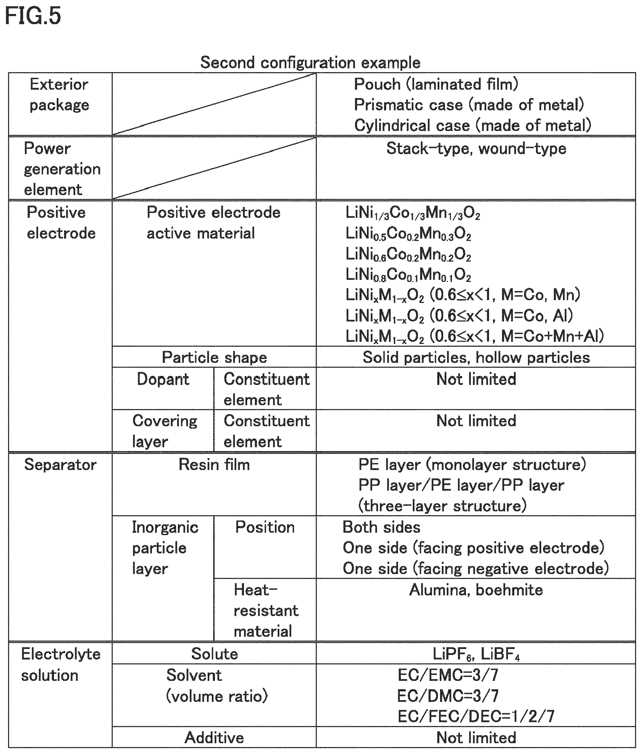

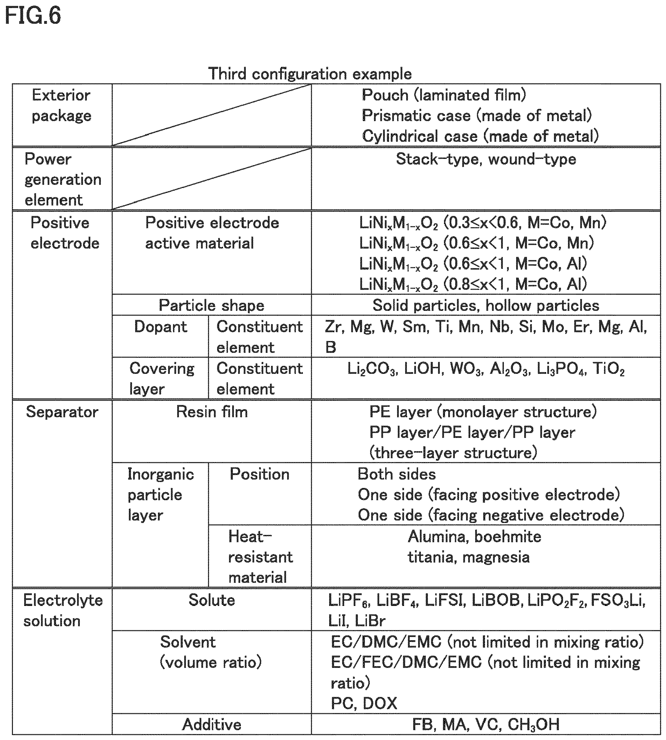

Fig. 4 is a first configuration example. Fig. 5 is a second configuration example. Fig. 6 is a third configuration example. In the table in each figure, when a plurality of materials are described in a single cell, this description is intended to mean one of them as well as a combination of them. For example, when materials "$\alpha$, $\beta$, $\gamma$" are described in a single cell, this description is intended to mean "at least one selected from the group consisting of $\alpha$, $\beta$, and $\gamma$".

In the present embodiment, as long as the covering layer (a Li-ion conductor) is positioned on the surface of negative electrode base material 21 and a Li metal dissolution/deposition reaction takes place at negative electrode 20, the other configurations (such as the combination of the positive electrode, the separator, and the electrolyte solution, and the like) are not particularly limited. For example, certain elements may be extracted from the first configuration example, the second configuration example, and the third configuration example, and they may be combined together in a freely-selected manner.

[Examples]

<Production of Test Battery>

Test batteries (anode-free batteries) according to Nos. 1 to 60 were produced in the procedure described below. For example, hereinafter, "the test battery according to No. 1" may be simply referred to as "No. 1" and the like.

No. 1

As a positive electrode base material, an Al foil was prepared. A positive electrode coating material was applied to the surface of the Al foil with the use of a die coater, and dried. By this, a positive electrode active material layer was formed. With a rolling mill, the resulting positive electrode active material layer was compressed. Thus, a positive electrode raw sheet was produced. The resulting positive electrode raw sheet was cut into a predetermined shape, and thereby a positive electrode was prepared. The positive electrode active material was LiNi$_{1/3}$Co$_{1/3}$Mn$_{1/3}$O$_2$.

As a separator, a resin film (thickness, 20 $\mu$m) was prepared. The resin film included an olefin-based resin.

As a negative electrode base material, a Cu foil was prepared. The Cu foil was cut into a predetermined shape, and thereby a negative electrode was prepared.

The positive electrode, the separator, and the negative electrode were stacked in this order, and thereby a power generation element was formed. The resulting power generation element was placed inside an exterior package. Into the exterior package, an electrolyte solution was injected. The composition of the electrolyte solution was as described below.

Composition of electrolyte solution
Solute: LiPF$_6$ (1 mol/L)
Solvent: EC/DMC=1/1 (volume ratio)

After the electrolyte solution was injected, the exterior package was hermetically sealed. In this manner, a test battery was produced.

No. 2

Commercially available Li$_3$PO$_4$ powder (Li-ion conductivity, $1 \times 10^{-7}$ S/cm) was prepared. The Li$_3$PO$_4$ powder and a PVDF solution were mixed to prepare a coating material. The mixing ratio was "(Li-ion conductor)/(PVDF solution)=80/20 (mass ratio)". The coating material was applied to the surface of the negative electrode base material by gravure coating to form a covering layer. By the procedure described above, the covering rate was measured. The covering rate was 30%. Except that a negative electrode including the covering layer was used, in the same manner as in No. 1, a test battery was produced.

No. 3

Commercially available $Li_3PO_4$ powder (Li-ion conductivity, $1\times10^{-7}$ S/cm) was pulverized with the use of a mechanochemical apparatus. The pulverized product was sintered at a low temperature. Pulverization and low-temperature sintering were repeated alternately. In this manner, the Li-ion conductivity of $Li_3PO_4$ was adjusted to $2\times10^{-9}$ S/cm. The $Li_3PO_4$ powder (Li-ion conductivity, $2\times10^{-9}$ S/cm) and a PVDF solution were mixed to prepare a coating material. Except for this, in the same manner as in No. 2, a test battery was produced.

Nos. 4 to 8

Fig. 7 is Table 1 showing evaluation results. Each test battery was produced in the same manner as in No. 3 except that the Li-ion conductivity of $Li_3PO_4$ was adjusted as specified in Table 1. For example, in Fig. 7 and the like, the expression "2E-09" means "$2\times10^{-9}$".

Nos. 9 to 12

Fig. 8 is Table 2 showing evaluation results. Each test battery was produced in the same manner as in No. 3 except that the coating material was applied to the surface of the negative electrode base material in such a manner that a covering layer having the covering rate as specified in Table 2 was to be formed.

Nos. 13 to 20

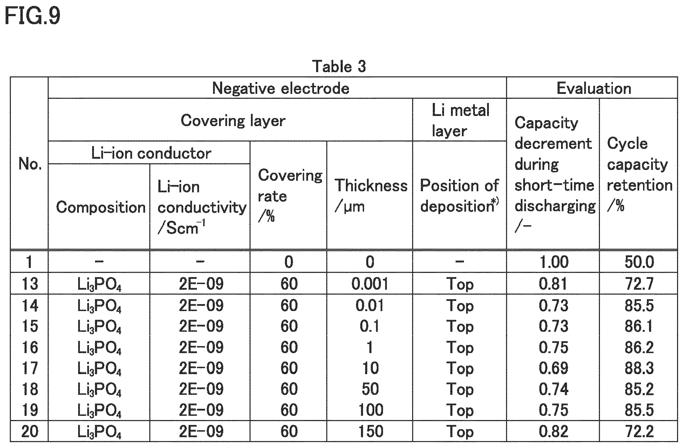

Fig. 9 is Table 3 showing evaluation results. Each test battery was produced in the same manner as in No. 3 except that the coating material was applied to the surface of the negative electrode base material in such a manner that a covering layer having the covering rate and the thickness as specified in Table 3 was to be formed.

No. 21 to No. 44

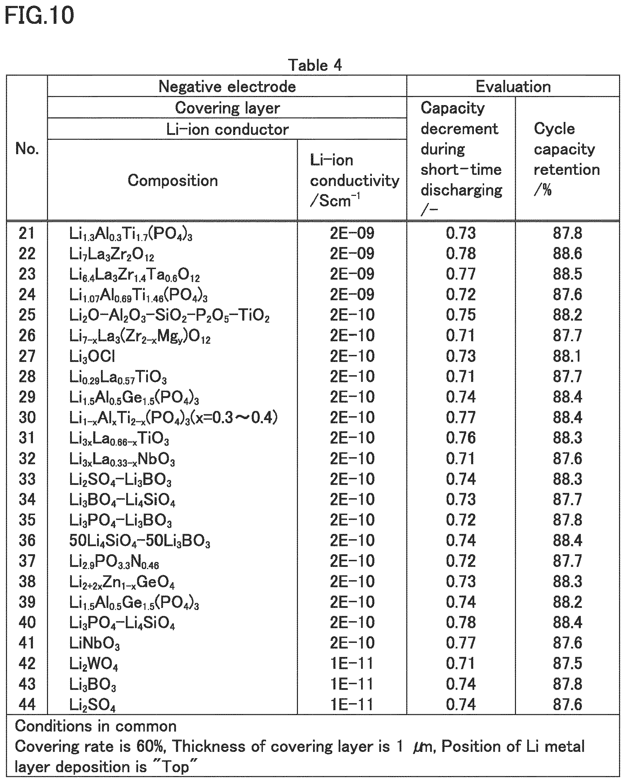

Fig. 10 is Table 4 showing evaluation results. Each test battery was produced in the same manner as in No. 16 except that $Li_3PO_4$ was replaced by the Li-ion conductor specified in Table 4.

No. 45 to No. 60

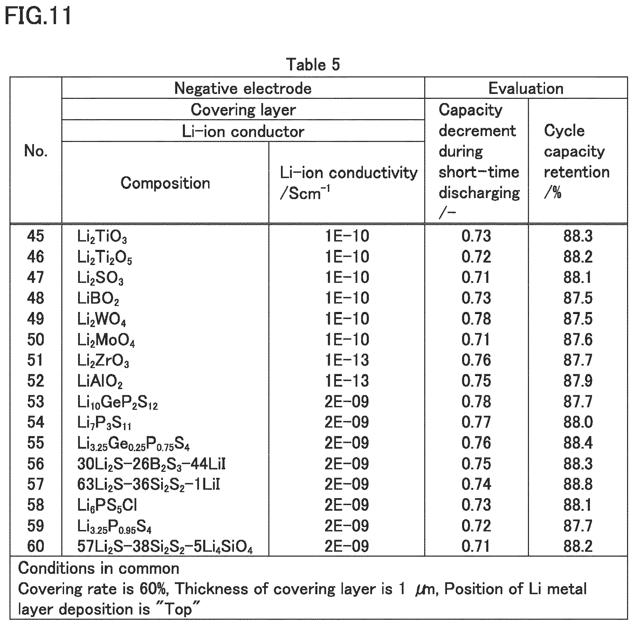

Fig. 11 is Table 5 showing evaluation results. Each test battery was produced in the same manner as in No. 16 except that $Li_3PO_4$ was replaced by the Li-ion conductor specified in Table 5.

<Evaluation>

Capacity decrement during short-time discharging

The OCV (Open Circuit Voltage) of the test battery was adjusted to 3.7 V. In an environment at a temperature of 25°C, at a current of 50 C, the battery was discharged for 100 seconds. "C" is a symbol denoting the hour rate of current. With a current of 1 C, the rated capacity of a battery is discharged in 1 hour. After discharging, the battery was charged to 4.2 V at a current of 1 C. After charging, discharged capacity was measured at a current of 1 C. The discharged capacity was subtracted from the initial capacity to determine capacity decrement. The capacity decrement is shown in Table 1 to Table 5 (Fig. 7 to Fig. 11). Each value of capacity decrement in the tables has been normalized relative to the capacity decrement of No. 1 defined as "1". The smaller the capacity decrement is, the better the resistance against short-time high-rate discharging is considered to be.

Cycle Endurance
Cycle testing was carried out under the conditions described below.
Ambient temperature: 60°C
Charge/discharge mode: Constant-current mode
Current rate: 1 C

Voltage range: 3.3 to 4.2 V
Number of cycles: 200

The discharged capacity at the 200th cycle was divided by the discharged capacity at the first cycle to determine cycle capacity retention. The cycle capacity retention is expressed in percentage. The cycle capacity retention is shown in Table 1 to Table 5 (Fig. 7 to Fig. 11). The higher the cycle capacity retention is, the better the cycle endurance is considered to be.

Position of Li Metal Layer Deposition

The SOC of the battery was adjusted to 100%. After the SOC adjustment, the battery was disassembled and the negative electrode was collected. In a cross section of the negative electrode, the position of Li metal deposition was checked.

<Results>

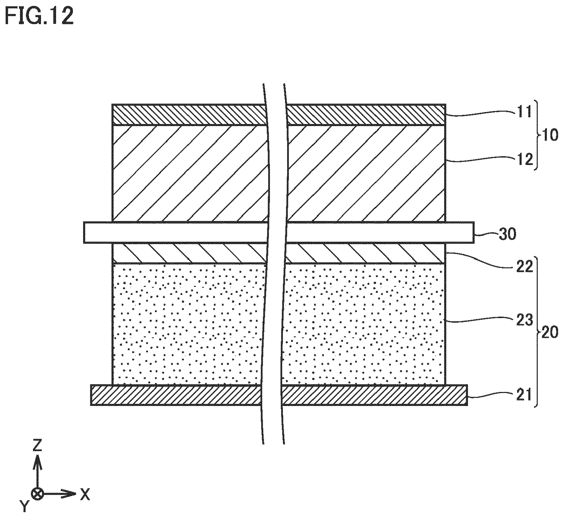

Fig. 12 is a conceptual view illustrating the position of Li metal deposition in No. 2. In No. 2, Li metal layer 23 was formed between covering layer 22 and negative electrode base material 21. It is conceivable that, in No. 2, due to the high Li-ion conductivity of the Li-ion conductor, Li ions easily permeate through covering layer 22. Cycle endurance of No. 2 was slightly improved as compared to No. 1 (which did not include a covering layer).
No. 3 and No. 2 are different in the Li-ion conductivity of the Li-ion conductor. In No. 3, Li metal layer 23 was formed on covering layer 22 (see Fig. 2). Cycle endurance of No. 3 was markedly improved as compared to Nos. 1 to 2.

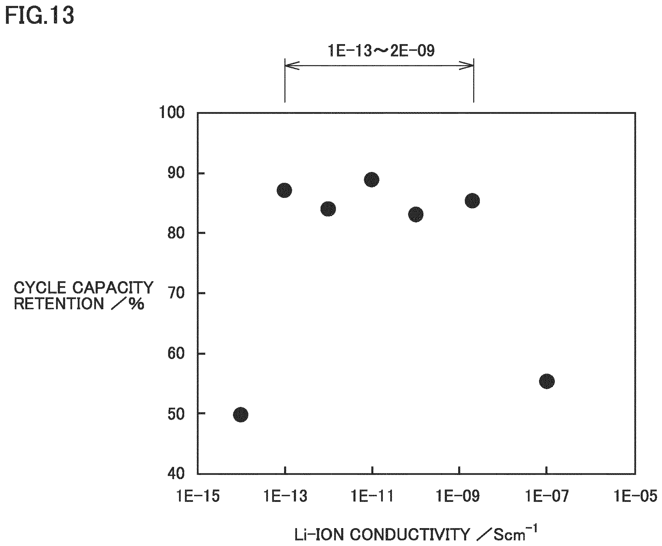

Fig. 13 is a graph plotting the evaluation results of Fig. 7. The graph in Fig. 13 is a single logarithmic graph. The horizontal axis is a logarithmic axis. When the Li-ion conductivity of the Li-ion conductor is from $1.0 \times 10^{-13}$ to $2.0 \times 10^{-9}$ S/cm, cycle endurance tends to be markedly enhanced.
Fig. 7 (Table 1) indicates a tendency that capacity decrement in Nos. 1, 2 during short-time discharging is high. When discharging is carried out at a high current density in a short time, the Li metal layer dissolves rapidly. It is conceivable that the surrounding components could not follow the rapid volume change of the Li metal layer and thereby peeling occurred at the interface between the Li metal layer and the negative electrode base material. In contrast to this, Nos. 3 to 7 tend to exhibit small capacity decrement during short-time discharging. It may be because peel strength of the Li metal layer was enhanced due to the presence of the covering layer interposed between the Li metal layer and the negative electrode base material.

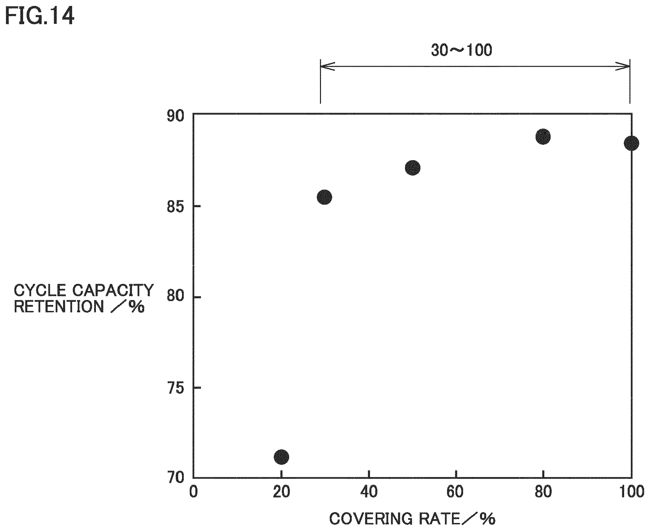

Fig. 14 is a graph plotting the evaluation results of Fig. 8. When the covering rate is from 30 to 100% (in other words, when the relationship of the above expression (1-1) is satisfied), cycle endurance tends to be enhanced.

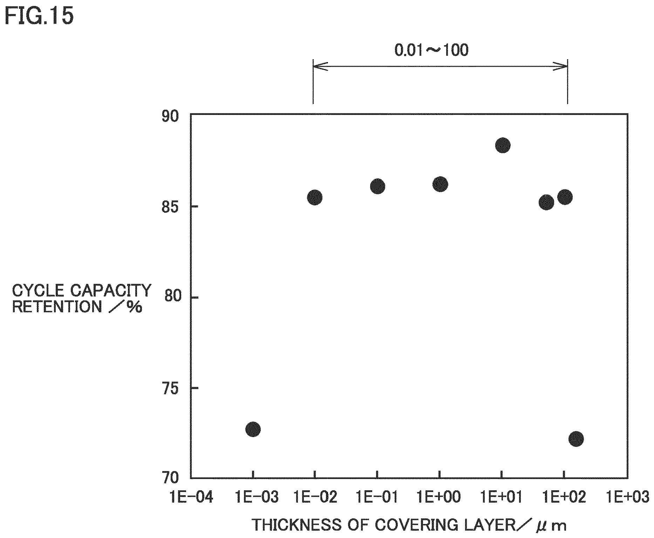

Fig. 15 is a graph plotting the evaluation results of Fig. 9. The graph in Fig. 9 is a single logarithmic graph. The horizontal axis is a logarithmic axis. When the thickness of the covering layer is from 0.01 to 100 $\mu$m, cycle endurance tends to be enhanced.
When the Li-ion conductivity of the Li-ion conductor having various compositions is from $1.0 \times 10^{-13}$ to $2.0 \times 10^{-9}$ S/cm, cycle endurance tends to be improved (see Fig. 10, Fig. 11).

**Claims**

1. A lithium metal negative electrode secondary battery comprising:

    a positive electrode (10);
    a separator (30);
    a negative electrode (20); and
    an electrolyte solution, wherein
    the electrolyte solution includes lithium ions,
    the separator (30) is interposed between the positive electrode (10) and the negative electrode (20),
    the negative electrode (20) includes a negative electrode base material (21) and a covering layer (22),
    the covering layer (22) covers at least part of a surface of the negative electrode base material (21),
    the covering layer (22) includes a lithium-ion conductor, and
    the lithium-ion conductor has a lithium-ion conductivity from $1.0 \times 10^{-13}$ to $2.0x \ 10^{-9}$ S/cm.

2. The lithium metal negative electrode secondary battery according to claim 1, wherein

the lithium-ion conductor includes a first component, a second component, and a third component,
the first component is Li,
the second component is at least one selected from the group consisting of Mg, Al, Ti, Zn, Zr, Nb, Mo, Ta, W, and a rare earth element, and
the third component is at least one selected from the group consisting of B, N, O, Si, P, S, Ge, and a halogen.

3. The lithium metal negative electrode secondary battery according to claim 1 or 2, wherein

the covering layer (22) further includes a binder, and
a volume fraction of the binder relative to a sum of the lithium-ion conductor and the binder is 0.2 or more.

4. The lithium metal negative electrode secondary battery according to claim 1 or 2, wherein
a relationship of an expression (1-1) is satisfied:

$$0.3 \leq A_2/A_1 \leq 1.0 \qquad (1\text{-}1)$$

where

$A_1$ represents an area of a first region,
$A_2$ represents an area of a second region,
the first region refers to a region of the surface of the negative electrode base material (21) facing the positive electrode (10), and
the second region refers to a region of the first region covered with the lithium-ion conductor.

5. The lithium metal negative electrode secondary battery according to claim 1 or 2, wherein the covering layer (22) has a thickness from 0.01 to 100 $\mu$m.

6. The lithium metal negative electrode secondary battery according to claim 1 or 2, wherein the lithium-ion conductor includes lithium phosphate.

7. The lithium metal negative electrode secondary battery according to claim 1 or 2, wherein the lithium metal negative electrode secondary battery is an anode-free battery.

FIG.1

FIG.2

FIG.3

# FIG.4

First configuration example

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode | Positive electrode active material | | $LiCoO_2$<br>$LiNi_{0.6}Co_{0.2}Mn_{0.2}O_2$<br>$LiNi_{0.7}Co_{0.1}Mn_{0.2}O_2$<br>$LiNi_{0.8}Co_{0.1}Mn_{0.1}O_2$ |
| | Particle shape | | Solid particles, hollow particles |
| | Dopant | Constituent element | Mg, Zr, W, Al, Ti, Co |
| | Covering layer | Constituent element | B, Al, Ti, Co, W, F |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite |
| Electrolyte solution | Solute | | $LiPF_6$, LiFSI |
| | Solvent (volume ratio) | | EC/EMC/DEC=3/7−x/x ($0 \leq x \leq 7$)<br>EC/EMC/DMC=3/7−x/x ($0 \leq x \leq 7$)<br>EC/PC/EMC/DEC=3/2/(4−x)/x ($0 \leq x \leq 4$)<br>EC/PC/EMC/DMC=3/2/(4−x)/x ($0 \leq x \leq 4$) |
| | Additive | | FB, FEC, VC |

## FIG.5

Second configuration example

| | | | |
|---|---|---|---|
| Exterior package | | | Pouch (laminated film)<br>Prismatic case (made of metal)<br>Cylindrical case (made of metal) |
| Power generation element | | | Stack-type, wound-type |
| Positive electrode | Positive electrode active material | | $LiNi_{1/3}Co_{1/3}Mn_{1/3}O_2$<br>$LiNi_{0.5}Co_{0.2}Mn_{0.3}O_2$<br>$LiNi_{0.6}Co_{0.2}Mn_{0.2}O_2$<br>$LiNi_{0.8}Co_{0.1}Mn_{0.1}O_2$<br>$LiNi_xM_{1-x}O_2$ ($0.6{\leq}x{<}1$, M=Co, Mn)<br>$LiNi_xM_{1-x}O_2$ ($0.6{\leq}x{<}1$, M=Co, Al)<br>$LiNi_xM_{1-x}O_2$ ($0.6{\leq}x{<}1$, M=Co+Mn+Al) |
| | Particle shape | | Solid particles, hollow particles |
| | Dopant | Constituent element | Not limited |
| | Covering layer | Constituent element | Not limited |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite |
| Electrolyte solution | Solute | | $LiPF_6$, $LiBF_4$ |
| | Solvent (volume ratio) | | EC/EMC=3/7<br>EC/DMC=3/7<br>EC/FEC/DEC=1/2/7 |
| | Additive | | Not limited |

# FIG.6

Third configuration example

| | | | |
|---|---|---|---|
| Exterior package | | | Pouch (laminated film)<br>Prismatic case (made of metal)<br>Cylindrical case (made of metal) |
| Power generation element | | | Stack-type, wound-type |
| Positive electrode | Positive electrode active material | | $LiNi_xM_{1-x}O_2$ (0.3≤x<0.6, M=Co, Mn)<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Separator | Resin film | | PE layer (monolayer structure)<br>PP layer/PE layer/PP layer (three-layer structure) |
| | Inorganic particle layer | Position | Both sides<br>One side (facing positive electrode)<br>One side (facing negative electrode) |
| | | Heat-resistant material | Alumina, boehmite<br>titania, magnesia |
| Electrolyte solution | Solute | | $LiPF_6$, $LiBF_4$, LiFSI, LiBOB, $LiPO_2F_2$, $FSO_3Li$, LiI, LiBr |
| | Solvent (volume ratio) | | EC/DMC/EMC (not limited in mixing ratio)<br>EC/FEC/DMC/EMC (not limited in mixing ratio)<br>PC, DOX |
| | Additive | | FB, MA, VC, $CH_3OH$ |

# FIG.7

Table 1

| No. | Negative electrode | | | | | Evaluation | |
| | Covering layer | | | | Li metal layer | Capacity decrement during short-time discharging /- | Cycle capacity retention /% |
| | Li-ion conductor | | Covering rate /% | Thickness /μm | Position of deposition[*) | | |
| | Composition | Li-ion conductivity /Scm⁻¹ | | | | | |
|---|---|---|---|---|---|---|---|
| 1 | – | – | 0 | 0 | – | 1.00 | 50.0 |
| 2 | $Li_3PO_4$ | 1E-07 | 30 | 1 | Bottom | 0.99 | 55.3 |
| 3 | $Li_3PO_4$ | 2E-09 | 30 | 1 | Top | 0.72 | 85.5 |
| 4 | $Li_3PO_4$ | 1E-10 | 30 | 1 | Top | 0.75 | 83.1 |
| 5 | $Li_3PO_4$ | 1E-11 | 30 | 1 | Top | 0.77 | 88.9 |
| 6 | $Li_3PO_4$ | 1E-12 | 30 | 1 | Top | 0.78 | 84.1 |
| 7 | $Li_3PO_4$ | 1E-13 | 30 | 1 | Top | 0.73 | 87.1 |
| 8 | $Li_3PO_4$ | 1E-14 | 30 | 1 | Top | 0.95 | 49.7 |

*) "Bottom" means that deposition occurred between the covering layer and the negative electrode base material (see Fig. 12).
"Top" means that deposition occurred between the covering layer and the separator (see Fig. 2).

# FIG.8

Table 2

| No. | Negative electrode | | | | | Evaluation | |
| | Covering layer | | | | Li metal layer | Capacity decrement during short-time discharging /- | Cycle capacity retention /% |
| | Li-ion conductor | | Covering rate /% | Thickness /μm | Position of deposition[*) | | |
| | Composition | Li-ion conductivity /Scm⁻¹ | | | | | |
|---|---|---|---|---|---|---|---|
| 1 | – | – | 0 | 0 | – | 1.00 | 50.0 |
| 9 | $Li_3PO_4$ | 2E-09 | 20 | 1 | Top | 0.88 | 71.2 |
| 3 | $Li_3PO_4$ | 2E-09 | 30 | 1 | Top | 0.72 | 85.5 |
| 10 | $Li_3PO_4$ | 2E-09 | 50 | 1 | Top | 0.75 | 87.1 |
| 11 | $Li_3PO_4$ | 2E-09 | 80 | 1 | Top | 0.76 | 88.9 |
| 12 | $Li_3PO_4$ | 2E-09 | 100 | 1 | Top | 0.72 | 88.2 |

## FIG.9

Table 3

| No. | Negative electrode | | | | | Evaluation | |
|---|---|---|---|---|---|---|---|
| | Covering layer | | | | Li metal layer | Capacity decrement during short-time discharging /- | Cycle capacity retention /% |
| | Li-ion conductor | | Covering rate /% | Thickness /μm | Position of deposition[*] | | |
| | Composition | Li-ion conductivity /Scm⁻¹ | | | | | |
| 1 | – | – | 0 | 0 | – | 1.00 | 50.0 |
| 13 | Li₃PO₄ | 2E-09 | 60 | 0.001 | Top | 0.81 | 72.7 |
| 14 | Li₃PO₄ | 2E-09 | 60 | 0.01 | Top | 0.73 | 85.5 |
| 15 | Li₃PO₄ | 2E-09 | 60 | 0.1 | Top | 0.73 | 86.1 |
| 16 | Li₃PO₄ | 2E-09 | 60 | 1 | Top | 0.75 | 86.2 |
| 17 | Li₃PO₄ | 2E-09 | 60 | 10 | Top | 0.69 | 88.3 |
| 18 | Li₃PO₄ | 2E-09 | 60 | 50 | Top | 0.74 | 85.2 |
| 19 | Li₃PO₄ | 2E-09 | 60 | 100 | Top | 0.75 | 85.5 |
| 20 | Li₃PO₄ | 2E-09 | 60 | 150 | Top | 0.82 | 72.2 |

FIG.10

Table 4

| No. | Negative electrode | | Evaluation | |
| | Covering layer | | Capacity decrement during short-time discharging /– | Cycle capacity retention /% |
| | Li-ion conductor | | | |
| | Composition | Li-ion conductivity /Scm$^{-1}$ | | |
|---|---|---|---|---|
| 21 | $Li_{1.3}Al_{0.3}Ti_{1.7}(PO_4)_3$ | 2E-09 | 0.73 | 87.8 |
| 22 | $Li_7La_3Zr_2O_{12}$ | 2E-09 | 0.78 | 88.6 |
| 23 | $Li_{6.4}La_3Zr_{1.4}Ta_{0.6}O_{12}$ | 2E-09 | 0.77 | 88.5 |
| 24 | $Li_{1.07}Al_{0.69}Ti_{1.46}(PO_4)_3$ | 2E-09 | 0.72 | 87.6 |
| 25 | $Li_2O-Al_2O_3-SiO_2-P_2O_5-TiO_2$ | 2E-10 | 0.75 | 88.2 |
| 26 | $Li_{7-x}La_3(Zr_{2-x}Mg_y)O_{12}$ | 2E-10 | 0.71 | 87.7 |
| 27 | $Li_3OCl$ | 2E-10 | 0.73 | 88.1 |
| 28 | $Li_{0.29}La_{0.57}TiO_3$ | 2E-10 | 0.71 | 87.7 |
| 29 | $Li_{1.5}Al_{0.5}Ge_{1.5}(PO_4)_3$ | 2E-10 | 0.74 | 88.4 |
| 30 | $Li_{1-x}Al_xTi_{2-x}(PO_4)_3(x=0.3\sim0.4)$ | 2E-10 | 0.77 | 88.4 |
| 31 | $Li_{3x}La_{0.66-x}TiO_3$ | 2E-10 | 0.76 | 88.3 |
| 32 | $Li_{3x}La_{0.33-x}NbO_3$ | 2E-10 | 0.71 | 87.6 |
| 33 | $Li_2SO_4-Li_3BO_3$ | 2E-10 | 0.74 | 88.3 |
| 34 | $Li_3BO_4-Li_4SiO_4$ | 2E-10 | 0.73 | 87.7 |
| 35 | $Li_3PO_4-Li_3BO_3$ | 2E-10 | 0.72 | 87.8 |
| 36 | $50Li_4SiO_4-50Li_3BO_3$ | 2E-10 | 0.74 | 88.4 |
| 37 | $Li_{2.9}PO_{3.3}N_{0.46}$ | 2E-10 | 0.72 | 87.7 |
| 38 | $Li_{2+2x}Zn_{1-x}GeO_4$ | 2E-10 | 0.73 | 88.3 |
| 39 | $Li_{1.5}Al_{0.5}Ge_{1.5}(PO_4)_3$ | 2E-10 | 0.74 | 88.2 |
| 40 | $Li_3PO_4-Li_4SiO_4$ | 2E-10 | 0.78 | 88.4 |
| 41 | $LiNbO_3$ | 2E-10 | 0.77 | 87.6 |
| 42 | $Li_2WO_4$ | 1E-11 | 0.71 | 87.5 |
| 43 | $Li_3BO_3$ | 1E-11 | 0.74 | 87.8 |
| 44 | $Li_2SO_4$ | 1E-11 | 0.74 | 87.6 |

Conditions in common
Covering rate is 60%, Thickness of covering layer is 1 μm, Position of Li metal layer deposition is "Top"

# FIG.11

Table 5

| No. | Negative electrode | | Evaluation | |
| | Covering layer | | Capacity decrement during short-time discharging /- | Cycle capacity retention /% |
| | Li-ion conductor | | | |
| | Composition | Li-ion conductivity /Scm⁻¹ | | |
|---|---|---|---|---|
| 45 | $Li_2TiO_3$ | 1E-10 | 0.73 | 88.3 |
| 46 | $Li_2Ti_2O_5$ | 1E-10 | 0.72 | 88.2 |
| 47 | $Li_2SO_3$ | 1E-10 | 0.71 | 88.1 |
| 48 | $LiBO_2$ | 1E-10 | 0.73 | 87.5 |
| 49 | $Li_2WO_4$ | 1E-10 | 0.78 | 87.5 |
| 50 | $Li_2MoO_4$ | 1E-10 | 0.71 | 87.6 |
| 51 | $Li_2ZrO_3$ | 1E-13 | 0.76 | 87.7 |
| 52 | $LiAlO_2$ | 1E-13 | 0.75 | 87.9 |
| 53 | $Li_{10}GeP_2S_{12}$ | 2E-09 | 0.78 | 87.7 |
| 54 | $Li_7P_3S_{11}$ | 2E-09 | 0.77 | 88.0 |
| 55 | $Li_{3.25}Ge_{0.25}P_{0.75}S_4$ | 2E-09 | 0.76 | 88.4 |
| 56 | $30Li_2S-26B_2S_3-44LiI$ | 2E-09 | 0.75 | 88.3 |
| 57 | $63Li_2S-36Si_2S_2-1LiI$ | 2E-09 | 0.74 | 88.8 |
| 58 | $Li_6PS_5Cl$ | 2E-09 | 0.73 | 88.1 |
| 59 | $Li_{3.25}P_{0.95}S_4$ | 2E-09 | 0.72 | 87.7 |
| 60 | $57Li_2S-38Si_2S_2-5Li_4SiO_4$ | 2E-09 | 0.71 | 88.2 |

Conditions in common
Covering rate is 60%, Thickness of covering layer is 1 $\mu$m, Position of Li metal layer deposition is "Top"

FIG.12

FIG.13

FIG.14

FIG.15

THICKNESS OF COVERING LAYER／$\mu$ m

Europäisches
Patentamt

European
Patent Office

Office européen
des brevets

**EUROPEAN SEARCH REPORT**

Application Number

EP 24 15 3967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 246 968 A1 (BASF SE [DE]; SION POWER CORP [US]) 22 November 2017 (2017-11-22) * paragraphs [0025], [0107], [0107], [0149], [0150], [0131], [0063], [0059], [0091], [0070], [0079]; figure 2B * | 1-7 | INV. H01M4/131 H01M4/134 H01M4/136 H01M4/1391 H01M4/36 H01M4/40 H01M4/58 ADD. H01M4/02 |
| A | JP 2017 168317 A (TOSHIBA CORP) 21 September 2017 (2017-09-21) * paragraphs [0023], [0035] * | 1-7 | |
| A | US 2006/008700 A1 (YONG HYUN H [KR] ET AL) 12 January 2006 (2006-01-12) * the whole document * | 1-7 | |

TECHNICAL FIELDS
SEARCHED      (IPC)

H01M

The present search report has been drawn up for all claims

| Place of search | Date of completion of the search | Examiner |
|---|---|---|
| Munich | 26 June 2024 | Lavorenti, Marek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 3967

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| EP 3246968 | A1 | 22-11-2017 | EP | 3246968 A1 | 22-11-2017 |
| | | | EP | 4177982 A1 | 10-05-2023 |
| JP 2017168317 | A | 21-09-2017 | CN | 107204416 A | 26-09-2017 |
| | | | EP | 3220447 A1 | 20-09-2017 |
| | | | JP | 6786231 B2 | 18-11-2020 |
| | | | JP | 2017168317 A | 21-09-2017 |
| | | | KR | 20170107894 A | 26-09-2017 |
| | | | US | 2017271639 A1 | 21-09-2017 |
| US 2006008700 | A1 | 12-01-2006 | BR | PI0511309 A | 04-12-2007 |
| | | | EP | 1782489 A1 | 09-05-2007 |
| | | | EP | 3739668 A1 | 18-11-2020 |
| | | | HU | E052954 T2 | 28-05-2021 |
| | | | JP | 6285092 B2 | 28-02-2018 |
| | | | JP | 2008503049 A | 31-01-2008 |
| | | | JP | 2011138780 A | 14-07-2011 |
| | | | JP | 2012190805 A | 04-10-2012 |
| | | | JP | 2018063948 A | 19-04-2018 |
| | | | PL | 1782489 T3 | 31-05-2021 |
| | | | RU | 2336602 C1 | 20-10-2008 |
| | | | TW | I321860 B | 11-03-2010 |
| | | | US | 2006008700 A1 | 12-01-2006 |
| | | | WO | 2006004366 A1 | 12-01-2006 |

EPO FORM P0459

For more details about this annex : see Official Journal of the European Patent Office, No. 12/82

**EP 4 418 343 A1**

## REFERENCES CITED IN THE DESCRIPTION

**Patent documents cited in the description**

- JP 2023021505 A

- JP 2021166195 A